(19) Europäisches Patentamt

European Patent Office

Office européen des brevets

(11) Veröffentlichungsnummer : **0 325 957 B1**

(12) **EUROPÄISCHE PATENTSCHRIFT**

(45) Veröffentlichungstag der Patentschrift :
13.03.91 Patentblatt 91/11

(21) Anmeldenummer : 89100491.3

(22) Anmeldetag : 12.01.89

(51) Int. Cl.⁵ : **G01C 11/02, G03B 15/00**

(54) **Grossmassstäbliches Kartieren von Parametern mehrdimensionaler Strukturen in Naturräumen.**

(30) Priorität : 28.01.88 DE 3802541

(43) Veröffentlichungstag der Anmeldung :
02.08.89 Patentblatt 89/31

(45) Bekanntmachung des Hinweises auf die
Patenterteilung :
13.03.91 Patentblatt 91/11

(84) Benannte Vertragsstaaten :
**AT BE CH DE ES FR GB GR IT LI LU NL SE**

(56) Entgegenhaltungen :
**CH-A- 449 405**
**US-A- 1 797 849**
**US-A- 2 665 481**
**US-A- 4 199 759**

(56) Entgegenhaltungen :
**PHOTO-TECHNIK UND -WIRTSCHAFT, Band
23, nr. 4, April 1972, Seiten 92-96; S. SCHNEI-
DER: "Moderne photographische Fernerkundungsverfahren im Dienst der
Umweltforschung"**

(73) Patentinhaber : **Schmidt von Braun, Heiko Dr.
Tankenrain Salzgraben 2
W-8120 Weilheim (DE)**

(72) Erfinder : **Schmidt von Braun, Heiko Dr.
Tankenrain Salzgraben 2
W-8120 Weilheim (DE)**

(74) Vertreter : **Patentanwälte Beetz sen. - Beetz
jun. Timpe - Siegfried - Schmitt-Fumian- Mayr
Steinsdorfstrasse 10
W-8000 München 22 (DE)**

**Beschreibung**

Die vorliegende Erfindung betrifft ein Verfahren zum großmaßstäblichen Kartieren von Parametern mehrdimensionaler Strukturen in Naturräumen sowie ein zur Durchführung dieses Verfahrens besonders geeignetes Bildflugzeug.

Fachleute verschiedenster Ausrichtungen sind daran interessiert umfassende Informationen über Verhältnisse in Naturräumen zu erhalten, die als Grundlage für Bestandsaufnahmen, Planungen oder Vorhersagen von zukünftigen Veränderungen in Naturräumen weiterverarbeitet werden können.

Unter "Naturraum" ist dabei der erdoberflächenbezogene Lebensraum des Menschen zu verstehen, einschließlich des Solums und den von Pflanzen belebten Luftraum und den von außerhalb in den Naturraum eingreifenden Einflüssen. Die Naturraumkartierung ist eine ökologische Kartierung des weltweiten menschlichen Lebensraums und seiner durch die menschliche Nutzung gegebenen Gefährdungen in den durch die Methodik beschriebenen Grenzen und Möglichkeiten.

Als ein sehr aktuelles Beispiel kann einerseits die Bestandsaufnahme des Waldsterbens genannt werden, die in bestimmten zeitlichen Abständen erfolgen muß, um eine zeitliche Veränderung aufzuzeigen, die als Entscheidungsgrundlage für Gegenmaßnahmen dienen soll. Im Alpenraum ist ferner der Zustand von Berghängen von besonderem Interesse, da bestimmte Parameter, wie z.B. Dichte des Bewuchses, Arten der dort wachsenden Pflanzen und Bäume, Gesundheitszustand dieser Pflanzen, Feuchtigkeitsdurchlässigkeit der Erdschichten usw. dem Fachmann Indizien liefern, die auf zukünftige Entwicklungen, wie z.B. Hangabgänge und Geröllawinen, hindeuten.

Auch für die Planung von Eingriffen in Naturräume ist eine umfassende Kenntnis der vorliegenden Gegebenheiten unerläßlich. Vor Neuanpflanzungen ist z.B. die Bodenqualität und Feuchtigkeit zu beachten, um die richtige Wahl des Pflanzgutes zu treffen.

Bei sehr großflächigen Naturräumen kommt aus zeitlichen Erwägungen in erster Linie eine Kartierung aus der Luft in Betracht, da bodengebundene Kartierungsverfahren zwangsläufig nur jeweils sehr kleine Teilbereiche eines Naturraumes erfassen können und ferner sehr viel Zeit in Anspruch nehmen. Eine solche Kartierung aus der Luft zum Zweck der Erfassung von Umweltparametern mit Hilfe eines mit einer Erkundungskammer ausgerüsteten Bildflugzeugs ist aus dem Artikel : Moderne photographische Fernerkundungsverfahren im Dienste der Umweltforschung von S. Schneider in Photo-Technik und -Wirtschaft, Nr. 4, Bd. 23, April 1972, Seiten 92-96 bekannt.

Am Beispiel der Waldschadensaufnahme sei im folgenden ein weiteres herkömmliches Vorgehen beim Kartieren aus der Luft erläutert.

Bei diesem Verfahren werden Bildaufnahmetechniken angewendet, die in sehr ähnlicher Form bereits aus der Aerophotogrammetrie bekannt sind. Die Aerophotogrammetrie wird im wesentlichen dazu verwendet, die Erdoberfläche zu vermessen. Dabei überfliegt ein Bildflugzeug in einer Höhe von in der Regel 1000 m und mehr über Grund ein zu vermessendes Gebiet, wobei mit einer senkrecht nach unten gerichteten Reihenmeßkammer sich teilweise überlappende Fotoaufnahmen aufgenommen werden, die anschließend ausgemessen werden.

Bisher ließen Normalluftbilder zwar eine gute Raum- und Bestandsplanung zu, jedoch aufgrund der Maßstabsgegebenheiten (maximal 1 : 2000) war eine Detailerkennung z.B. von sicherer Baumartenbestimmung, Einzelbaummessungen nach Höhe und Baumstärke, standortkundliche Gegebenheiten nicht möglich. Die Hauptaufklärungsarbeit war immer noch durch die kosten- und zeitintensive Geländearbeit mit der hierfür typischen Fehlerquote zu erbringen. Die durch diese Methodik gewonnenen Daten sind in fast allen Fällen nicht reproduzierbar. Eine flächendeckende Geländeerfassung bis ins Detail von Zentimetergröße auf mehrere 100.000 ha pro Jahr war gar nicht in Erwägung zu ziehen. Gerade dies ist aber die Forderung, der rasch fortschreitenden Veränderung an dem Hauptumweltindikator Wald für ökolgische Lang- und Kurzzeitanalysen.

Mit Hilfe von Infrarotfalschfarbenfilmen gelingt es, trockenes Laub und nicht abgestorbenes saftiges Laub deutlich voneinander zu unterscheiden. Damit lassen sich in einem Waldgebiet absterbende Bäume von gesunden Bäumen unterscheiden, die auf einem Film mit einer spektralen Empfindlichkeit, die der des menschlichen Auges entspricht, nicht mehr aus dieser Höhe zu erkennen wären. Solche Falschfarbeninfrarotfilme sind sehr kostspielig und schwierig zu handhaben. Ferner erfordert die bei der Aerophotogrammetrie übliche Flughöhe eine ausreichend klare Wetterlage und hohen Sonnenstand (Sommer) ; was in die Planung der Dauer einer solchen Bestandsaufnahme miteinbezogen werden muß. Insgesamt läßt sich dieses Verfahren zum Kartieren von Waldschäden – da sehr wetterkritisch – als verhältnismäßig kostspielig und langwierig beschreiben, was dem akuten Informationsbedarf auf diesem speziellen Gebiet diametral entgegensteht.

Der Einsatz von Infrarot- und Infrarotfalschfarbenfilmen erhöht zwar die Detailerkennung aus größeren Flughöhen ganz erheblich, findet jedoch seine Begrenzung in der Forderung nach absolut schönem Wetter zu Zeiten des Sonnenjahreshochstandes, sodaß die Einsatzzeit auf ca. 6 Wochen pro jahr begrenzt ist und damit sämtliche Flugzeuge eines Raumes in dieser Periode permanent in Bereitschaft stehen müssen, um überhaupt flächendeckende Aussagen nach der Auswertung zu erlauben. 6 Wochen Regen sind durchaus in der Zeit des Sonnenjahreshöchststandes möglich, sodaß die Befliegung und Auswertung wirtschaftlich nicht kalkulierbar ist. Zusätzlich ist der Preis eines entwickelten Infrarotfalschfarbenfilms etwa um das 10-fache höher, als der eines höher auflösenden Schwarz-Weiß-Films. Zusätzlich ist die Emulsion eines Falschfarbenfilms wesentlich kritischer auf Lagerungsbedingungen, als die für einen Schwarz-Weiß-Film. Die Beherrschung eines Falschfarbenfilmes stellt wesentlich höhere Anforderungen an die Filmmessung vor dem Flug, wie auch bei der Weiterverarbeitung während der Entwicklung. So sind erfahrungsgemäß Fotolabors mit wenigen Ausnahmen nicht in der Lage, gleiche Farbtemperaturen von gleichen Objekten über viele jahre hinweg zu erzeugen. Dies jedoch ist eine entscheidende Forderung für die Aussagekraft eines Infrarotfalschfarbenfilms.

Für bestimmte Untersuchungen kommt auch ein Elektronenscanverfahren in Betracht, das ebenfalls mit Hilfe eines Bildflugzeugs durchgeführt wird, wobei lediglich die Fotoaufnahmekammer durch einen Reflexionselektronendetektor ersetzt wird.

Die Scanmethodik von Forstflächen ergibt dabei ein weites Feld von elektronisch automatisierten Bildbearbeitungen mit sehr interessanten Einzelergebnissen. Diese jedoch sind für die praktisch forstlich verwertbaren Flächenaussagen nur von Fachpersonal möglich, das beide Fächer (praktische Forstwirtschaft-Scantechnik) wissenschaftlich gleichwertig bedienen können muß. Diese Forderung ist zur Zeit praktisch nicht erfüllbar.

Auch dieser Methode haften also die Nachteile des oben geschilderten Verfahrens an, was die Kostspieligkeit und Dauer betrifft. Letzteres ist dabei noch etwas kritischer, da zur Durchführung eines Elektronenscanverfahrens ein bestimmter Sonnenstand erforderlich ist, der ein störungsfreies Messen nur an wenigen Tagen im jahr ermöglicht.

Darüber hinaus kommt bei den oben erwähnten Verfahren hinzu, daß mit Hilfe von Falschfarbenaufnahmen zwar eine Reihe von Parametern deutlich hervorgehoben werden können, andere Parameter sind jedoch mit dieser Methode nicht sichtbar zu machen. So reicht z.B. das Auflösungsvermögen der verwendeten Filme bei der erwähnten Flughöhe in der Regel nicht aus, um bestimmte Baumarten sicher zu unterscheiden oder um detaillierte Aussagen über die geologischen Verhältnisse im, Naturraum machen zu können.

Der vorliegenden Erfindung liegt die Aufgabe zugrunde, ein Verfahren zum großmaßstäblichen Kartieren von Parametern mehrdimensionaler Strukturen in Naturräumen sowie ein zur Durchführung dieses Verfahrens besonders geeignetes Bildflugzeug anzugeben, mit denen es ermöglicht wird, Naturräume sehr kostengünstig und vollständig in kurzer Zeit hinsichtlich einer großen Anzahl erfaßbarer Parameter mehrdimensionaler Strukturen zu kartieren.

Diese Aufgabe wird anspruchsgemäß gelöst.

Das erfindungsgemäße Kartierungsverfahren geht von folgender Grundidee aus.

Bildflüge, die zu Vermessungszwecken durchgeführt werden, finden regelmäßig in relativ großen Höhen statt, etwa zwischen 1000 und 3000 m über dem Boden, weil unter diesen Umständen die Bildverzerrungen, die am Rande einer jeden Aufnahme auftreten, gering gehalten werden. Ferner sind die pro Aufnahme abgedeckten Erdoberflächenausschnitte relativ groß, so daß große Gebiete relativ schnell punktgenau ausgemessen werden können. Die bisher angewandten Techniken zur Sichtbarmachung bestimmter Strukturen auf der Erdoberfläche übernehmen kritiklos die aus der Landvermessung bekannten aerophotogrammetrischen Bildflugmethoden, insbesondere auch deren Flughöhe, und versuchen durch die Verwendung eines speziellen Filmmaterials die interessierenden Strukturen sichtbar zu machen. Es liegt auf der Hand, daß dieses Verfahren immer dann an seine Grenzen stößt, wenn Parameter von Strukturen erfaßt werden sollen, die durch bestimmte Eigenschaften des Filmmaterials nicht selektiv hervorgehoben werden können. Andererseits ist die Auflösung bei aus großer Höhe aufgenommenen Stereoaufnahmen in vertikaler Richtung stark eingeschränkt. Geht man nun von den in der Photogrammetrie üblichen Flughöhen zu bedeutend tieferen Flughöhen über, so ergeben sich daraus mehrere Konsequenzen, die gegeneinander abgewogen werden müssen. Einerseits steigt die Auflösung der Aufnahmen, so daß die interessierenden Strukturen bereits un unmittelbar auf den Aufnahmen abgelesen werden können, ohne daß dazu ein besonders präpariertes Filmmaterial notwendig ist. Dies hat zur Folge, daß anstelle beispielsweise sehr kostspieliger Infrarotfalschfarbenfilme sehr preisgünstige Schwarzweißfilme verwendet werden können, aus denen beispielsweise ein Fachmann ohne weiteres erkennen kann, ob das Laub von aufgenommenen Bäumen ausgetrocknet ist oder nicht. Ferner lassen sich Pflanzenarten unterscheiden, die auf einem Falschfarbenfilm lediglich Bereiche gleicher Verfärbung bewirkt hätten. Aus der Tatsache, daß an bestimmten Stellen bestimmte Pflanzenarten wachsen, kann der Fachmann wiederum auf die Bodenbeschaffenheit und Feuchtigkeit rückschließen.

Andererseits werden die projektiven Einflüsse auf die Aufnahmen größer, was zu Verzerrungen der Aufnahmen führt. Diese Verzerrungen können jedoch in Kauf genommen werden, solange sie es ermöglichen, die Aufnahme einem bestimmten Ausschnitt eines Naturraumes, z.B. im Gauß-Krüger-Netz, eindeutig zuzuordnen. Bei den Anwendungsbereichen des erfindungsgemäßen Verfahrens kommt es in erster Linie auf großmaßstäbliche Relativmessungen von Strukturen an und nicht auf die Absolutvermessung eines Naturraumes als solchem. Das hat ferner zur Folge, daß die in dem erfindungsgemäßen Verfahren erfolgenden Bildflüge nicht den strengen Anforderungen an die Ausrichtung des Flugzeuges genügen müssen, wie dies bei aerophotogrammetrischen Landvermessungsverfahren der Fall ist.

Ferner ermöglicht es die erfindungsgemäß geringe Flughöhe, Aufnahmen mit einem geringen Neigungswinkel gegenüber der Horizontalen aus dem Flugzeug heraus aufzunehmen, ohne daß die Bildweiten so groß werden, daß interessierende Strukturen nicht mehr aufgelöst werden können. Die Kombination von mindestens zwei solcher seitlich aus dem Flugzeug heraus aufgenommenen Aufnahmen, die jeweils unter verschiedenen Neigungswinkeln aufgenommen werden und auf dieselben Strukturen gerichtet sind, ermöglichen eine umfassende Betrachtung der interessierenden Strukturen, so daß Parameter, wie z. B. die Stammhöhe und -dicke von Bäumen, aus der Kombination verschiedener Aufnahmen herausgelesen werden können, die mit herkömmlichen Kartierverfahren nicht erfaßbar sind.

Der die Aufnahmetechnik betreffende Teilaspekt der vorliegenden Erfindung ermöglicht es also, mit relativ billigem Filmmaterial zu arbeiten und Bildflüge mit geringen Anforderungen an die Flugzeugausrichtung durchführen zu können, was die Auswertbarkeit der Aufnahmen nicht beeinträchtigt. Die niedrige Flughöhe bewirkt ferner, daß die Anforderungen an die Witterungsverhältnisse nicht so groß sind wie bei den Bildflügen, die in großer Höhe stattfinden. Es kann bei jedem Wetter, besonders bei bedecktem Himmel fotographiert werden, solange die Sichtentfernung mindestens gleich der Aufnahmeentfernung ist.

Die Auswertung der auf diese Weise gewonnenen Bildaufnahmen umfaßt folgende Schritte :

Geht man davon aus, daß der Ausschnitt aus dem Naturraum, in dem Parameter interessierender Strukturen ausgewertet werden sollen, vermessen ist, werden in einem ersten Schritt die zu verwertenden Aufnahmen hinsichtlich ihrer Lage in dem betreffenden Naturraum, z.B. im Gauß-Krüger-Netz, festgelegt. Vorzugsweise erstellt ein Rechner mit Hilfe einer eingegebenen topographischen Karte des interessierenden Naturraumausschnittes eine perspektivische Abbildung der Erdoberfläche des interessierenden Ausschnittes. Mit einem photogrammetrischen Auswertegerät werden die Koordinaten einer interessierenden Struktur ermittelt und die interessierenden Parameter dieser Struktur werden direkt aus der Betrachung der Fotoaufnahme oder einer digitalisierten Form der Aufnahme entnommen bzw. ausgemessen. Die Werte der Parameter werden dem Rechner unter der Adresse der ermittelten Koordinate der interessierenden Struktur in einen Speicher eingegeben, aus dem die Parameter selektiv auslesbar sind.

Auf diese Weise können bestimmte Gruppen von Parametern oder bestimmte Strukturen getrennt voneinander abgefragt werden und es können Statistiken, Karten oder Schaubilder erzeugt werden, die sich jeweils selektiv mit einzelnen Parametergruppen befassen oder in denen solche Parametergruppen miteinander kombiniert sind.

Diese Auswertetechnik hat folgende eminente Vorteile :

1. Die Auswertung des Schwarzweißbildmaterials beruht auf der Erkennung von Strukturen und deren Parameter in einer Form, wie sie sich dem menschlichen Auge auch in natura darstellt. Die großmaßstäblichen Aufnahmen erlauben eine Detailerkennbarkeit, die dem Verhältnis "messender Wissenschaftler am Objekt im Gelände" entspricht. Das bedeutet, daß die Auswertung der Aufnahmen von Personen durchgeführt werden kann, die zwar Fachleute hinsichtlich der sie interessierenden Strukturen sind, die jedoch keine Spezialisten hinsichtlich der Auswertung spezieller Fotoaufnahmen sind, wie dies bei Infrarotfalschfarbenaufnahmen und Elektronenscanaufnahmen der Fall ist. Geht es beispielsweise um die Beurteilung des Zustandes eines Waldes, so nimmt ein Forstfachmann die Auswertung der Aufnahmen vor, ohne daß dieser dazu besonders angeleitet werden muß.

2. Die großmaßstäblichen Bilder werden von Fachleuten der jeweiligen Strukturen messend ausgewertet. Dies bedeutet, daß die Auswertergebnisse jederzeit reproduzierbar sind und außerdem der Datenspeicher ausschließlich fachrelevante, reproduzierbare Daten räumlich orientiert enthält. Dieses absolut erstklassige Datenmaterial genügt jeglichen statistischen Forderungen und erlaubt die Verknüpfungen auch von Daten verschiedener fachlich getrennter Strukturen um somit fachübergreifende Antworten geben zu können. Dies ist unabdingbar notwendig, um komplexe Vorgänge bearbeiten zu können und befriedigende Antworten auf so komplexe Fragen geben zu können.

3. Die Zuordnung der erfaßten Parameter einer interessierenden Struktur zu den Koordinaten der Struktur im Naturraum und deren Abspeicherung in einem Rechner ermöglichen das selektive Auslesen bestimmter Parameterklassen für einen Naturraumausschnitt, so daß wiederum Nichtfachleuten auf dem Gebiet der Auswertung von Luftbildaufnahmen sehr anschaulich und leicht faßbar die gewünschten Informationen zugänglich gemacht werden können.

4. Die selektiv abrufbare Zuordnung verschiedener Parameter zu den Koordinaten der interessierenden Struktur im Naturraum vereinfacht den Dialog von Fachleuten verschiedener Fachrichtungen, was z.B. zur Lösung von Problemen hinsichtlich Umweltschäden in Naturräumen eine unabdingbare Notwendigkeit ist.

Im folgenden wird die Erfindung anhand der Beschreibung bevorzugter Ausführungsformen unter Bezugnahme auf die Zeichnung näher erläutert. Es zeigen :

Fig. 1 schematisch die Orientierung der einzelnen Aufnahmekammern bzw. des Videosuchers bei einem Bildflug ;

Fig. 2 die auf dem Bildschirm des Videosuchersystems eingeblendeten Orientierungshilfen ; und

Fig. 3 eine auf dem Bildschirm eines Rechners darstellbare Informationstafel mit bestimmten einer Koordinate einer interessierenden Struktur zugeordneten Daten

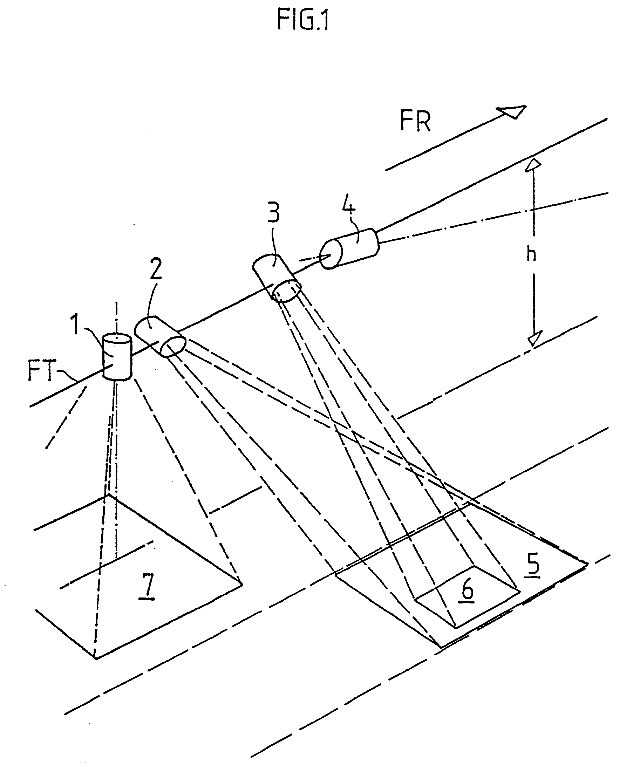

In Fig. 1 ist eine Flugtrasse FT eingezeichnet, auf der drei Kammern und eine Videosucherkamera dargestellt sind. Der Pfeil FR zeigt in Flugrichtung. Das Bildflugzeug selbst wurde zur Vereinfachung der Zeichnung nicht miteingezeichnet. Die Flugtrasse verläuft in konstanter Höhe h über dem Boden, soweit es die Beschaffenheit der Oberfläche des Naturraums zuläßt. In stark gebirgigem Gebiet erfordert das Einhalten einer möglichst konstanten Höhe ein leistungsstarkes Bildflugzeug (Konturfliegerei). Dies ist insbesondere dann der Fall, wenn Bergtäler quer zur Richtung ihrer Längserstreckung abgeflogen werden sollen.

Von links nach rechts sind auf der Flugtrasse (FT) dargestellt :

Eine senkrecht nach unten gerichtete Reihenmeßkammer 1, eine quer zur Flugrichtung seitlich nach unten geneigte Weitwinkelerkundungskammer 2, eine Telekammer 3 mit etwa der gleichen Ausrichtung wie die Weitwinkelerkundungskammer 2 und eine in Flugrichtung schräg nach unten ausgerichtete Videokamera 4.

Die Reihenmeßkammer 1 ist wie die Weitwinkelerkundungskammer und die Telekammer mit einem Schwarzweißfilm bestückt und nimmt Reihen von Luftbildern auf, deren zeitliche Abfolge mit den Aufnahmezeitpunkten der Kammern 2 und 3 getriggert ist und die zur Orientierung bzw. Lagebestimmung der aufgenommenen Strukturen im Naturraum bestimmt sind. Die Aufnahmen werden nach den aus der Aerophotogrammetrie bekannten Methoden ausgewertet.

Die Weitwinkelerkundungskammer 2 ist eine Weitwinkelkammer mit einem Öffnungswinkel bis 180°, die seitlich aus dem Bildflugzeug heraus schräg nach unten und quer zur Flugrichtung ausgerichtet ist. Die Erkundungskammer 2 ist auf einen Ausschnitt 5 des Naturraums gerichtet, in dem interessierende Strukturen auftreten. Dies kann beispielsweise ein Wald sein, dessen Bäume untersucht werden sollen. Mit der Telekammer 3, die im Flug in der Aufnahmerichtung verändert werden kann, können besonders interessierende Teilbereiche 6 der Aufnahmebereiche 5 der Erkundungskammer vergrößert wiedergegeben werden, um so einzelne Parameter der interessierenden Strukturen besser auswerten zu können. So kann z.B. die Telekammer 3 auf die Ränder von Lichtungen oder auf Waldränder gerichtet sein, um seitliche Aufnahmen von Bäumen zu gewinnen, die Aussagen über die Größe der Bäume und deren Stammstärke zulassen.

Sowohl die Erkundungskammer 2 als auch die Telekammer 3 sind hinsichtlich ihres Winkels, den sie mit der Flugrichtung einschließen, in gewissen Grenzen ausrichtbar, so daß Reihenmeßluftbilder aus mindestens zwei verschiedenen Aufnahmerichtungen quer zur Überfliegungsrichtung erfaßt werden können. Ferner ist auch ihre Neigung gegenüber der Horizontalen frei wählbar, so daß bei geeigneten Strukturen auch hier unter zwei verschiedenen Aufnahmewinkeln aufgenommene Luftbilder bei zweimaligem Befliegen des interessierenden Teilbereichs des Naturraums erstellt werden können.

Die Winkel, unter denen die Erkundungskammer 2 und die Telekammer 3 bezüglich der Vertikalen, der Horizontalen und der Flugrichtung ausgerichtet sind, werden durch die Grenzen der Auswertetechnik eingeschränkt, die dann erreicht sind, wenn die durch die perspektivische Aufnahme bedingten Verzerrungen der interessierenden Strukturen mit rechnerischen Mitteln nicht mehr kompensiert werden können. Dies trifft insbesondere für Aufnahmen zu, die seitlich aus dem Bildflugzeug heraus sowohl schräg nach unten als auch quer zur Flugrichtung schräg nach vorne oder schräg nach hinten aufgenommen werden.

Zweckmäßigerweise sind die Meßkammern 1-3 mit Vorrichtungen zur automatischen Messung der Gegenstandsweiten und der Flugzeuggeschwindigkeit und zur entsprechenden Einstellung der Objektive ausgerüstet. Hierzu eignen sich insbesondere Radarabstandsmesser, wie sie in der Aerophotogrammetrie eingesetzt werden. Eine solche automatische Kammereinstellung ist insbesondere dann wichtig, wenn schmale Gebirgstäler in niedriger Höhe durchflogen werden und sich der seitliche Abstand der Gebirgshänge von der Flugtrasse in rascher Folge stark ändert.

Ein Videokamerasystem 4 mit einer bis 4 Videokameras ist in Flugrichtung schräg nach unten gerichtet und ist vorzugsweise mit einer Panoramaoptik versehen, so daß auf einem Monitorbildschirm das untersuchbare "Gesichtsfeld" der Luftaufnahmeoptiken wiedergegeben werden kann. Gleichzeitig kann der von der Videokamera aufgenommene Film auf einem Band aufgezeichnet werden, was das spätere Auffinden bestimmter Bildsequenzen und Bilddaten mit Orientierungen bei der Auswertung beschleunigen kann. Während des Bildfluges kann die Person, die die Aufnahmekammern bedient, auf dem Monitor verfolgen, wann und wo interessierende Strukturen in das Blickfeld der Erkundungskammer bzw. der Telekammer kommen werden. Um dieses Ausrichten der Erkundungskammer 2 und der Telekammer 3 auf interessierende Strukturen zu erleichtern, ist vorzugsweise ein mit der Aufhängung einer jeden Kammer gekoppeltes System vorgesehen, das es ermöglicht, die in Flugrichtung verlängerten Projektionen der Flugtrasse (10) sowie der mit der Erkundungskammer bzw. der Telekammer bei deren aktueller Ausrichtung erfaßten Bildbereiche (11, 12) darzustellen.

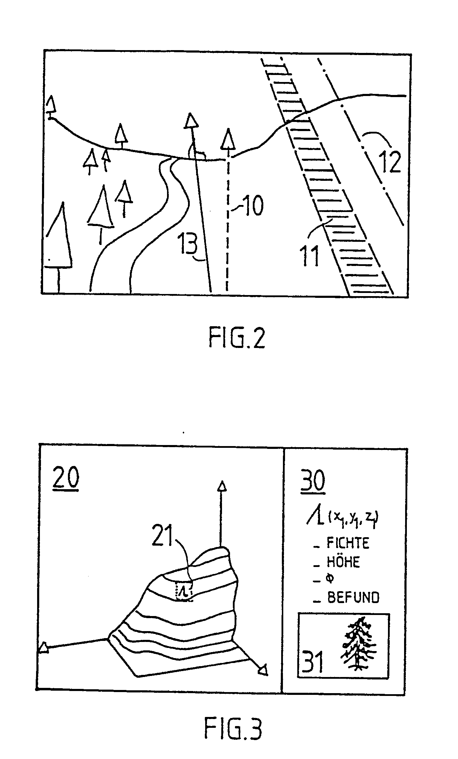

Fig. 2 zeigt schematisch diese Orientierungshilfen in dem von der Videokamera aufgenommenen Panoramabild. Dabei zeigt der gestrichelte Pfeil 10 die Lage der vertikalen Projektion der Flugtrasse auf dem Boden des überflogenen Naturraums an und das etwas breitere Band 11 zeigt den Bereich an, der zukünftig bei unveränderter Flugrichtung in das Gesichtsfeld der Erkundungskammer 2 kommt. Die strichpunktierte Linie 12 zeigt die Linie, die im Gesichtsfeld der Telekammer 3 bei deren derzeitiger Ausrichtung liegt, sofern die Flugrichtung beibehalten wird. Weiterhin wird der Soll-Kurs aus der Flugplanung auf dem Bildschirm als Linie dargestellt 13.

Zur Erstellung einer lückenlosen Dokumentation über Parameter eines interessierenden Teilbereichs eines Naturraums wird dieser Teilbereich bei einem ersten Bildflug aus mindestens zwei verschiedenen Aufnahmerichtungen quer zur Überfliegungsrichtung erfaßt. Dies kann dadurch geschehen, daß mehrere Erkundungs- bzw. Telekammern quer zur Flugrichtung schräg nach unten und schräg nach vorne bzw. schräg nach hinten bezüglich der Flugrichtung geneigt angeordnet sind, Zur Ermöglichung der Erkennung von Details interessierender Strukturen wird ein zweiter bodennaher Bildflug in niedrigerer Höhe durchgeführt, der es ermöglicht, Aufnahmen mit Abbildungsmaßstäben von 1 : 1600 und größer aufzunehmen. Es hat sich gezeigt, daß mittels solcher Aufnahmen, bei denen durchwegs kostengünstige Schwarzweißfilme verwendet werden, so feine Strukturen auf den Bildern mit bloßem Auge ausgewertet werden können, daß sich sogar bestimmte Gräserarten unterscheiden lassen.

Die Auswertung des auf diese Weise erstellten Bildmaterials wurde eingangs bereits kurz erläutert. Fig. 3 zeigt als Ergebnis einer solchen Auswertung die visuelle Darstellung von Parametern in einem Ausschnitt eines Naturraums. Man erkennt in dem Feld 20 auf dem Bildschirm die perspektivische Abbildung eines Ausschnitts eines Naturraums, die ein Rechner mit Hilfe einer topographischen Karte des Naturraums erstellt hat, Bei der Auswertung von den erfindungsgemäß gewonnenen Luftbildaufnahmen wurden interessierende Strukturen zuerst hinsichtlich ihrer Koordinaten analysiert und anschließend ausgewertet. Im Feld 20 deutet das Symbol 21, das einen Baum darstellt, an, daß an dieser Stelle des Naturraums die Luftaufnahmen einen interessierenden Baum zeigen, dessen interessierende Parameter im Feld 30 auf dem Bildschirm aufgeführt sind. Dort sind beispielsweise aufgelistet die Art des Baumes ; der Stammdurchmesser ; die Länge des Baumes ; ein etwaiger Krankheitsbefund sowie die Beschaffenheit des Bodens im näheren Umfeld des Baumes. Ferner ist die ausschnittweise Wiedergabe einer Luftaufnahme 31 vorgesehen, die bei der Auswertung digitalisiert wurde und nunmehr vom Rechner abgespeichert ist.

Der Koordinate X, Y, Z im Naturraum können weitere Strukturen zugeordnet sein, die anstelle der beispielsweise dargestellten Parameter abgespeichert und selektiv abrufbar sind, Dies können z.B. meteorologische Daten, geologische Daten oder ähnliche sein.

Hinsichtlich der Visualisierung der ausgewerteten Daten sind weitgehende Variationen des in Fig. 3 dargestellten Ausführungsbeispiels möglich. Wesentlich ist einzig die selektiv abrufbare Zuordnung verschiedener Parametergruppen, die einer Koordinate einer Struktur im Naturraum zugeordnet sind.

Auch die beispielsweise Beschreibung des erfindungsgemäßen Verfahrens ist nicht einschränkend zu verstehen, sondern dient lediglich zur Erläuterung des erfindungsgemäßen Verfahrens, wie es in Anspruch 1 definiert ist.

## Ansprüche

1. Verfahren zur großmaßstäblichen Kartierung von Parametern mehrdimensionaler Strukturen in Naturräumen, bei dem Stereoaufnahmen bei Bildflügen im Naturraum mit einer Weitwinkelerkundungskammer aufgenommen und ausgewertet werden, dadurch gekennzeichnet, daß der zu kartierende Naturraum oder Teilbereiche daraus bei den Bildflügen in einer Flughöhe zwischen etwa 150 bis 500 m über dem Boden mit mit einer unter verschiedenen Winkeln zur Flugachse schräg nach unten neigbaren Weitwinkelerkundungskammer (2) in Kombination mit einer unter verschiedenen Winkeln zur Flugachse schräg nach unten neigbaren Teleerkundungskammer (3) zur Erstellung von Detailaufnahmen aus dem durch die Weitwinkelerkundungskammer (2) abgedeckten Bereichsausschnitt aufgenommenen Reihenmeßluftbildern erfaßt werden,

die Lage der Reihenmeßluftbilder beispielsweise in einem Gauß-Krüger-Netz mittels Orientierungshilfen unter Anwendung aerophotogrammetrischer Methoden ermittelt wird, die Koordinaten der interessierenden Strukturen großmaßstäblich vermessen werden,

aus den Reihenmeßluftbildern und insbesondere aus den Detailaufnahmen die zu be stimmenden Parameterdaten dieser Strukturen ermittelt und zur Kartierung dieser Parameter diesen Koordinaten zugeordnet sowie selektiv abrufbar abgespeichert werden.

2. Verfahren nach Anspruch 1, dadurch gekennzeichnet, daß die Orientierungshilfen aus mit den Aufnahmezeitpunkten getriggerten Funkpositionsbestimmungen während des Bildfluges bestehen.

3. Verfahren nach Anspruch 1, dadurch gekennzeichnet, daß die Reihenmeßluftbilder aus senkrecht nach unten ausgerichteten Reihenmeßkammern (1) mit einem Abbildungsmaßstab von 1 : 1600 und größer aufgenommen werden und dadurch, daß die Aufnahmezeitpunkte dieser Reihenmeßkammern mit denen der Weitwinkelerkundungskammer (2) bzw. der Teleerkundungskammer (3) und gegebenenfalls einer Videokamera (4) und mit einem Bildflugschreiber getriggert sind.

4. Verfahren nach einem der vorstehenden Ansprüche, dadurch gekennzeichnet, daß die Teleerkundungskammer (3) entweder automatisch nach einem Flugplan mittels Rechnersteuerung oder durch einen Operator freihand geführt wird.

5. Verfahren nach einem der vorstehenden Ansprüche, dadurch gekennzeichnet, daß bei weiteren Bildflügen in Flughöhen um etwa 50 m über dem Boden und Bildmaßstäben von 1 : 500 und darunter Meßbildorientierungsreihen mit einer Erkundungskammer (2) aufgenommen und einzelne Strukturen aus mehreren Richtungen von oben und von der Seite aufgenommen werden.

6. Verfahren nach einem der Ansprüche 1-5, dadurch gekennzeichnet, daß die Photoaufnahmen mit Schwarzweißfilmen aufgenommen werden.

7. Verfahren nach Anspruch 3, dadurch gekennzeichnet, daß ein Schwarzweißfilm mit erhöhter Infrarotempfindlichkeit oder erhöhter Blauempfindlichkeit verwendet wird.

8. Verfahren nach einem der Ansprüche 1-7, dadurch gekennzeichnet, daß in zeitlich festgelegter Korrelation Aufnahmen von Ausschnitten des Naturraums mit den Erkundungskammern (2, 3) senkrecht nach unten und schräg nach unten geneigt, im wesentlichen quer zur Flugrichtung aufgenommen werden.

9. Verfahren nach einem der Ansprüche 1-8, dadurch gekennzeichnet, daß die Steuerung der Flugtrasse (FT) der Bildflüge und/oder der Ausrichtung der Erkundungskammern (2, 3) auf einen vorbestimmten Ausschnitt des Naturraumes über eine in Flugrichtung (FR) ausgerichtete Videokamera (4) erfolgt mit einem Bildschirm, auf dem die senkrechte in Flugrichtung verlängerte Projektion der Flugtrasse (10) und Orientierungslinien (11, 12), die die Ausrichtung der Erkundungskammern (2, 3) angeben, dem aufgenommenen Videobild überlagert sind.

10. Bildflugzeug, insbesondere zur Durchführung der Luftbildaufnahmen nach einem der Ansprüche 1-9, mit mindestens einer Reihenmeßkammer (1), die senkrecht nach unten gerichtet ist, gekennzeichnet durch eine unter verschiedenen Winkeln zur Flugzeuglängsachse schräg nach unten neigbare Weitwinkelerkundungskammer (2) und eine unter verschiedenen Winkeln zur Flugzeuglängsachse schräg nach unten neigbare Teleerkundungskammer (3) zur Erstellung von Detailaufnahmen aus dem durch die Weitwinkelerkundungskammer (2) abgedeckten Bereichsausschnitt und eine in Flugzeuglängsrichtung ausgerichtete Videokamera (4), in deren Abbildungsschirm die Flugtrasse (FT, 10) und die in Flugrichtung projizierte Ausrichtung (11) der Erkundungskammern (2, 3) einblendbar sind, wobei die Bildauslösezeitpunkte der Erkundungskammern (2, 3) markiert sind.

11. Anordnung nach Anspruch 10, dadurch gekennzeichnet, daß die Bildfolgefrequenz der Meßkammern (2, 3) und deren Kameraeinstellung über einen in Aufnahmerichtung der Kammern (2, 3) ausgerichteten Entfernungsmesser mit der Fluggeschwindigkeit gekoppelt steuerbar ist.

12. Anordnung nach Anspruch 10, gekennzeichnet durch Radarabstandsmesser zur Bestimmung der Gegenstandsweite der Erkundungskammern (2, 3) bzw. der Flughöhe (h) über Grund.

13. Anordnung nach einem der Ansprüche 10-12, dadurch gekennzeichnet, daß Meßgeräte zur Erfassung des Magnetfeldes zusätzlich zu den Erkundungskammern (2, 3) vorgesehen sind zur Kartierung von Magnetfeldern am Boden nach den Methoden der Aeromagnetik.

**Revendications**

1. Procédé destiné à la cartographie à grande échelle de paramètres de structures multidimensionnelles dans des espaces naturels, lors duquel des stéréophotographies sont prises pendant des vols photographiques dans l'espace naturel à l'aide d'une chambre de reconnaissance à objectif grand-angulaire et ensuite exploitées,

caractérisé en ce que l'espace naturel faisant l'objet de la cartographie ou des parties de l'espace naturel sont détectés lors des vols photographiques à une hauteur de vol entre environ 150 et 500 m au-dessus du sol à l'aide d'une chambre de reconnaissance à objectif grand-angulaire (2) inclinable obliquement vers le bas à des angles différents par rapport à l'axe du vol en combinaison avec une chambre de reconnaissance à téléobjectif (3) inclinable obliquement vers le bas à des angles différents par rapport à l'axe du vol pour prendre des photos de détail des aérophotogrammes en série prises dans le rayon couvert par la chambre de reconnaissance à objectif grand-angulaire (2),

la position des aérophotogrammes en série est déterminée par exemple dans un réseau Gauß-Krüger par l'intermédiaire de moyens d'orientation en appliquant des méthodes aérophotogrammétriques,

les coordonnées des structures d'intérêt sont mesurées à grande échelle,

les données des paramètres de ces structures sont déterminées à partir des aérophotogrammes en série et en particulier des photographies de détail, et que, pour la cartographie de ces paramètres, elles sont attribuées à ces coordonnées et mémorisées, pouvant être appelées sélectivement.

2. Procédé selon la revendication 1, caractérisé en ce que les moyens d'orientation consistent en des déterminations de position par radio pendant le vol photographique déclenchées par les instants de prise de vue.

3. Procédé selon la revendication 1, caractérisé en que que les aérophotogrammes en série sont prises par des chambres pour prise de vues en série (1) orientées verticalement vers le bas ayant un grandissement du cliché de 1 : 1600 et plus et en ce que les instants de prise de vue de ces chambres pour prise de vues en série sont déclenchés avec ceux de la chambre de reconnaissance à objectif grand-angulaire (2) resp. de la chambre de reconnaissance à téléobjectif (3) et, le cas échéant, une caméra vidéo (4) et avec un enregistreur de vol photographique.

4. Procédé selon une des revendications précédentes, caractérisé en ce que la chambre de reconnaissance à téléobjectif (3) est commandée soit automatiquement selon un plan de vol par ordinateur ou à la main par un opérateur.

5. Procédé selon une des revendications précédentes, caractérisé en ce que pendant d'autres vols photographiques à une hauteur de vol d'environ 50 m au-dessus du sol et en utilisant un grandissement du cliché de 1 : 500 et moins des séries d'orientation d'aérophotogrammes sont prises à l'aide d'une chambre de reconnaissance (2) et que des structures individuelles sont prises de plusieurs directions d'en haut et du côté.

6. Procédé selon une des revendications 1-5, caractérisé en ce que les photographies sont prises avec des films en noir et blanc.

7. Procédé selon la revendication 3, caractérisé en ce qu'on utilise un film en noir et blanc ayant une sensibilité élevée à l'infrarouge ou une sensibilité élevée au bleu.

8. Procédé selon une des revendications 1-7, caractérisé en ce que des photographies des parties de l'espace naturel sont prises dans une correlation du temps fixée par les chambres de reconnaissance (2, 3) inclinées verticalement vers le bas et obliquement vers le bas, en substance transversalement par rapport à la direction du vol.

9. Procédé selon une des revendications 1-8, caractérisé en ce que la commande du tracé de vol (FT) des vols photographiques et/ou de l'orientation des chambres de reconnaissance (2, 3) à une partie prédéterminée de l'espace naturel est effectué par une caméra vidéo (4) orientée en direction de vol (FR) ayant un écran sur lequel la projection verticale du tracé du vol (10), prolongé en direction du vol, et des lignes d'orientation (11, 12) indiquant l'orientation des chambres de reconnaissance (2, 3) sont superposées à l'image vidéo prise.

10. Avion-photographe, en particulier pour effectuer les photographies aériennes selon une des revendications 1-9, comprenant au moins une chambre pour prise de vues en série, orientée verticalement vers le bas, caractérisé par une chambre de reconnaissance à objectif grand-angulaire (2) inclinable obliquement vers le bas à angles différents par rapport à l'axe longitudinal de l'avion et une chambre de reconnaissance à téléobjectif (3) inclinable obliquement vers le bas à angles différents par rapport à l'axe longitudinal de l'avion pour prendre des photographies de détail du rayon couvert par la chambre de reconnaissance à objectif grand-angulaire (2) et une caméra vidéo (4) orientée en direction longitudinale de l'avion, dans l'écran de laquelle le tracé du vol (FT, 10) et l'orientation (11) des chambres de reconnaissance (2, 3) projetée en direction du vol peuvent être indiqués, les instants de déclenchement d'images des chambres de reconnaissance (2, 3) étant marqués.

11. Dispositif selon la revendication 10, caractérisé en ce que la fréquence de prise d'images des appareils photographiques de photogrammétrie (2, 3) et la mise au point de leur caméra peuvent être commandées par l'intermédiaire d'un télémètre orienté en direction de prise de vue des chambres (2, 3), lié à la vitesse de vol.

12. Dispositif selon la revendication 10, caractérisé par des télémètres radar pour déterminer la largeur d'objet des chambres de reconnaissance (2, 3) resp. de la hauteur de vol (h) au-dessus du sol.

13. Dispositif selon une des revendications 10-12, caractérisé en ce que des appareils de mesure pour détecter le champ magnétique sont prévus additionnellement aux chambres de reconnaissance (2, 3) pour cartographier les champs magnétiques sur le sol selon les méthodes aéromagnétiques.

## Claims

1. A method for the large-scale mapping of parameters of multi-dimensional structures in natural environments, wherein stereo-photographs are made in the natural environment during picture-taking flights, using a wide-angle reconnaissance camera, and are evaluated,

characterized in that the natural environment or range to be mapped or sections thereof are detected during picture-taking flights at a flight altitude between about 150 and 500 m above ground by means of a wide-angle reconnaissance camera (2) adapted to be inclined obliquely downwardly at different angles relative to the flight axis in combination with a tele-reconnaissance camera (3) adapted to be inclined obliquely downwardly at different angles relative to the flight axis for making detailed images from the series aerial surveying pictures taken in the range section covered by the wide-angle reconnaissance camera (2),

the position of the aerial surveying pictures is determined, for instance, in a Gauß-Krüger net by means of orienting aids using aerophotogrammatic techniques,

the coordinates of the structures of interest are subjected to large-scale surveying,

from the series aerial surveying pictures and in particular from the detailed images the parameter data of these structures are determined and are stored for the mapping of these parameters in a form so as to be assigned to said coordinates and to be selectively retrievable.

2. The method according to claim 1, characterized in that the orienting aids consist of radio position determinations during the picture-taking flight which are triggered with the image-taking instants.

3. The method according to claim 1, characterized in that the series aerial surveying pictures are taken from vertically downwardly directed series surveying cameras (1) using an imaging scale of 1 : 1600 and larger, and in that the image-taking instants of said series surveying cameras are triggered with those of the wide-angle reconnaissance camera (2) and the tele-reconnaissance camera (3), respectively, and optionally of a video camera (4), and with a picture-taking flight analyzer.

4. The method according to one of the preceding claims, characterized in that the tele-reconnaissance camera (3) is guided either automatically in accordance with a flight schedule using computer control, or free-handed by an operator.

5. The method according to one of the preceding claims, characterized in that during further picture-taking flights at flight altitudes of about 50 m above ground and at imaging scales of 1 : 500 and less surveying picture orientation series are taken by means of a reconnaissance camera (2), and individual structures are taken from several directions from above and from the side.

6. The method according to one of claims 1 to 5, characterized in that the photographic pictures are taken with black-and-white films.

7. The method according to claim 3, characterized in that a black-and-white film having an increased infrared sensitivity or an increased sensitivity for blue is used.

8. The method according to one of claims 1 to 7, characterized in that, in time-fixed correlation, pictures of sections of the range are taken by means of the reconnaissance cameras (2, 3) in a vertically downwardly and obliquely downwardly inclined fashion, and substantially transversely of the direction of flight.

9. The method according to one of claims 1 to 8, characterized in that control of the flight track (FT) of the picture-taking flights and/or of orientation of the reconnaissance cameras (2, 3) to a predetermined section of the range is effected via a video camera (4) oriented in the direction of flight (FR), said video camera having a display screen on which the vertical projection of the flight track (10), which is extended in the direction of flight, and orienting lines (11, 12) indicating the orientation of the reconnaissance cameras (2, 3) are overlapping the video picture taken.

10. A photographic aircraft, in particular for effecting aerial photographs according to one of claims 1 to 9, comprising at least one series surveying camera (1) directed vertically downwardly, characterized by a wide-angle reconnaissance camera (2) adapted to be inclined obliquely downwardly at different angles to the longitudinal axis of the aircraft and by a tele-reconnaissance camera (3) adapted to be inclined obliquely downwardly at different angles to the longitudinal axis of the aircraft for making detailed images of the range section covered by the wide-angle reconnaissance camera (2), and by a video camera (4) oriented in longitudinal direction of the aircraft, into the display screen of which the flight track (FT), 10) and the orientation (11) of the reconnaissance cameras (2, 3) projected in the direction of flight may be cross-faded, with the instants of image triggering of the reconnaissance cameras (2, 3) being marked.

11. The arrangement according to claim 10, characterized in that the image sequence frequency of the surveying cameras (2, 3) and the camera adjustments thereof are controllable via, a distance meter oriented in the picture-taking direction of the cameras (2, 3), coupled with the flying speed.

12. The arrangement according to claim 10, characterized by radar distance meters for determining the object width of the reconnaissance cameras (2, 3) and the flight altitude (h) above ground, respectively.

13. The arrangement according to one of claims 10 to 12, characterized in that measuring instruments for detecting the magnetic field are provided in addition to the reconnaissance cameras (2, 3) for mapping magnetic fields on the ground in accordance with the techniques used in aeromagnetics.

FIG.1

FIG.2

FIG.3